# EUROPÄISCHE PATENTSCHRIFT

(11) **EP 3 141 410 B1**
(45) Veröffentlichungstag und Bekanntmachung des Hinweises auf die Patenterteilung: **21.07.2021**
(21) Anmeldenummer: 16187644.6
(22) Anmeldetag: 07.09.2016
(51) Int. Cl.: B60H 1/00, B60H 3/06, F04D 29/42

(54) **LUFTFÜHRUNGSGEHÄUSE UND EINE BELÜFTUNGS-, HEIZUNGS- ODER KLIMAANLAGE MIT EINEM SOLCHEN LUFTFÜHRUNGSGEHÄUSE**
AIR FLOW HOUSING AND A VENTILATION, HEATING OR AIR CONDITIONING SYSTEM WITH SUCH AIR FLOW HOUSING
BOITIER DE GUIDAGE D'AIR ET APPAREIL DE VENTILATION, CHAUFFAGE OU CLIMATISATION DOTÉ D'UN TEL BOITIER DE GUIDAGE D'AIR

(30) Priorität: 09.09.2015 DE 102015217245
(43) Veröffentlichungstag der Anmeldung: 15.03.2017
(73) Patentinhaber: Mahle International GmbH, 70376 Stuttgart (DE)
(72) Erfinder: Pfander, Andreas, 71384 Weinstadt (DE); Schaake, Dr. Norman, 71706 Markgröningen (DE)
(74) Vertreter: Grauel, Andreas

(56) Entgegenhaltungen:
- EP-A1- 2 786 885
- DE-A1- 19 944 175
- US-A1- 2006 065 389
- US-A1- 2012 000 363
- US-A1- 2012 180 998

## Beschreibung

### Technisches Gebiet

Die Erfindung betrifft ein Luftführungsgehäuse gemäß dem Oberbegriff von Anspruch 1. Darüber hinaus betrifft die Erfindung eine Belüftungs-, Heizungs- oder Klimaanlage gemäß Anspruch 5.

### Stand der Technik

Die DE 199 44 175 A1 offenbart eine Heizungs- oder Klimaanlage für ein Kraftfahrzeug mit einem saugseitig einem Gebläse vorgeschalteten Luftansauggehäuse, dem jeweils wenigstens ein wechselweise verschließbarer und öffenbarer Lufteinlass für Frischluft und Umluft zugeordnet ist, wobei wenigstens ein Luftfilter zum Reinigen von Frischluft vorgesehen und druckseitig dem Gebläse ein Luftverteilergehäuse nachgeschaltet ist. Dem Gebläse ist ein dem Luftansauggehäuse zugeordneter Ansaugstutzen mit Lufteinlassöffnungen vorgeordnet, an dem umfangseitig eine Dosiereinrichtung für die Lufteinlassöffnungen angelagert ist, wobei die Achse der Dosiereinrichtung koaxial zur Achse des Gebläses in Fahrzeugrichtung verläuft. Die US 2012/0000363 A1 offenbart eine Luftfiltervorrichtung mit einem Gehäuse und einem Gebläserad sowie mit verschiedenen Lufteinlässen und Luftauslässen.

Die DE 199 44 175 A1 offenbart eine Heizungs- und Klimaanlage mit einem Luftansauggehäuse mit einem Gebläse mit einem Schieber zum Umschalten zwischen einem Frischluftzustrom und einem Umluftzustrom.

Die im oben genannten Stand der Technik offenbarte Vorrichtung weist im Betrieb einen relativ hohen Pegel an unerwünschten Betriebsgeräuschen auf. Eine Belüftungs-, Heizungs- oder Klimaanlage, dessen Luftführungsgehäuse im Betrieb eine leisere Geräuschkulisse aufweist, ist daher von Vorteil.

### Darstellung der Erfindung, Aufgabe, Lösung, Vorteile

Es ist die Aufgabe der Erfindung, ein verbessertes Luftführungsgehäuse bereitzustellen, welches im Betrieb einen niedrigeren Geräuschpegel aufweist. Darüber hinaus ist es die Aufgabe der Erfindung, eine Belüftungs-, Heizungs- oder Klimaanlage bereitzustellen, welche ein solches Luftführungsgehäuse aufweist.

Die Aufgabe zum Luftführungsgehäuse wird mit den Merkmalen von Anspruch 1 gelöst.

Ein Ausführungsbeispiel der Erfindung betrifft ein Luftführungsgehäuse, insbesondere für eine Belüftungs-, Heizungs- oder Klimaanlage eines Fahrzeugs, mit zumindest einer ersten Lufteinlassöffnung, wobei die zumindest eine erste Lufteinlassöffnung eine Querschnittsfläche aufweist, welche vertikal zu einer ersten Achse angeordnet ist, und mit zumindest einer zweiten Lufteinlassöffnung, wobei die zumindest eine zweite Lufteinlassöffnung eine Querschnittsfläche aufweist, welche vertikal zu einer zweiten Achse angeordnet ist, und mit zumindest einer Luftauslassöffnung, wobei die zumindest eine Luftauslassöffnung eine Querschnittsfläche aufweist, welche vertikal zu einer dritten Achse angeordnet ist, und mit einem Gebläserad zum Ansaugen von Luft in das Luftführungsgehäuse. Dabei sind die zweite Achse und die dritte Achse parallel zueinander angeordnet. In vorteilhafter Weise werden hierdurch die bei der Förderung der Luft durch das Luftführungsgehäuse entstehenden Geräusche reduziert.

Erfindungsgemäß sind die erste Achse und die zweite Achse in einem Winkel von etwa 90° zueinander angeordnet und die erste Achse und die dritte Achse sind in einem Winkel von etwa 90° zueinander angeordnet. Der durch die Luftförderung im Luftführungsgehäuse gebildete Geräuschpegel wird dadurch noch einmal deutlich reduziert.

Erfindungsgemäß ist vorgesehen, dass die zumindest eine erste Lufteinlassöffnung mit einem Frischluftkanal fluidverbunden ist, wobei über den Frischluftkanal Frischluft aus der Umgebung des Fahrzeugs durch die zumindest eine erste Lufteinlassöffnung in das Luftführungsgehäuse ansaugbar ist.

Erfindungsgemäß ist durch die zumindest eine zweite Lufteinlassöffnung Umluft aus einem Umluftkanal und/oder aus einer Kabine des Fahrzeugs in das Luftführungsgehäuse ansaugbar.

Erfindungsgemäß ist vorgesehen, dass das Gebläserad drehbar um eine vierte Achse gelagert ist, wobei die zweite Achse und die vierte Achse in einem Winkel von etwa 90° zueinander angeordnet sind. Eine direkte Schallabstrahlung in einen Fahrzeuginnenraum wird dadurch vermieden.

Bei einer zusätzlichen Ausführungsform des Luftführungsgehäuses sind die erste Achse und die vierte Achse parallel zueinander angeordnet und die dritte Achse und die vierte Achse sind in einem Winkel von etwa 90° zueinander angeordnet.

Erfindungsgemäß ist in der Luftströmungsrichtung hinter der zumindest einen Luftauslassöffnung ein Luftfilter angeordnet.

Eine zusätzliche Ausführungsform des Luftführungsgehäuses sieht vor, dass im Bereich der zumindest einen ersten Lufteinlassöffnung und/oder im Bereich der zumindest einen zweiten Lufteinlassöffnung und/oder im Bereich der zumindest einen Luftauslassöffnung Verbindungselemente zur Verbindung des Luftführungsgehäuses mit einer Fluidkanalanordnung ausgebildet sind. Hierdurch lässt sich das Luftführungsgehäuse auf einfache Weise in eine Belüftungs-, Heizungs- oder Klimaanlage integrieren.

Bei einem weiteren Ausführungsbeispiel des Luftführungsgehäuses ist im Bereich des Luftführungsgehäuses und/oder in einem zum Luftführungsgehäuse benachbart angeordneten Bereich zumindest eine Luftstromsteuervorrichtung und/oder zumindest eine Luftstromsteuerungsanordnung zum wahlweisen und/oder anteilig dosierbaren Ansaugen und/oder Beströmen des Luftführungsgehäuses mit Frischluft und/oder Umluft angeordnet.

Die Aufgabe zur Belüftungs-, Heizungs- oder Klimaanlage wird mit den Merkmalen von Anspruch 5 gelöst.

Ein Ausführungsbeispiel der Belüftungs-, Heizungs- oder Klimaanlage sieht vor, dass die Belüftungs-, Heizungs- oder Klimaanlage zumindest ein gemäß der oben genannten Beschreibung ausgebildetes Luftführungsgehäuse aufweist.

### Kurze Beschreibung der Zeichnung

Nachstehend wird die Erfindung auf der Grundlage zumindest eines Ausführungsbeispiels anhand der Figuren der Zeichnung näher erläutert. Es zeigen:
- Fig. 1: eine Schnittansicht eines Luftführungsgehäuses gemäß dem Stand der Technik,
- Fig. 2: eine Schnittansicht eines Ausführungsbeispiels eines erfindungsgemäßen Luftführungsgehäuses, und
- Fig. 3: ein Kurvendiagramm.

### Bevorzugte Ausführung der Erfindung

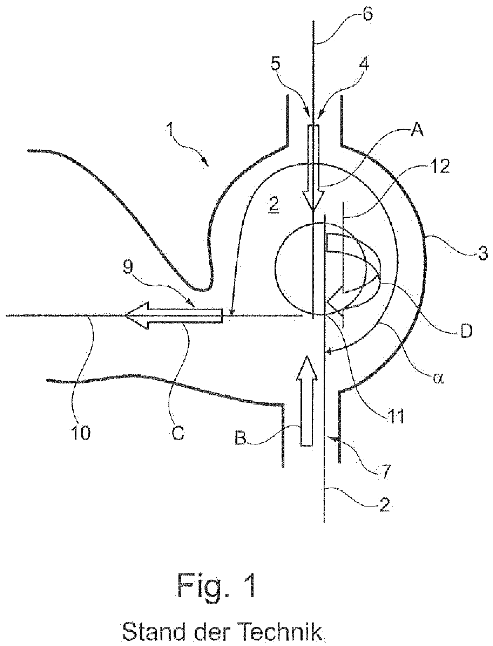

In Figur 1 ist eine schematische Schnittansicht eines Luftführungsgehäuses 1 gemäß dem Stand der Technik dargestellt, welches beispielhaft Teil einer nicht dargestellten Belüftungs-, Heizungs- oder Klimaanlage ist. Das Luftführungsgehäuse 1 weist eine Kammer 2 mit einer Kammerwand 3 auf. An der Kammerwand 3 ist eine erste Lufteinlassöffnung 4 angeordnet. Die erste Lufteinlassöffnung 4 dient beispielhaft als Frischlufteinlassöffnung 5, welche mit einem nicht dargestellten Frischluftkanal fluidverbunden ist. Die erste Lufteinlassöffnung 4 weist beispielhaft einen rund oder eckig ausgebildeten Querschnitt auf. Die Querschnittsfläche der ersten Lufteinlassöffnung 4 bildet dabei eine erste Ebene, welche im Wesentlichen senkrecht zu einer ersten Achse 6 angeordnet ist. Die erste Achse 6 durchragt dabei beispielhaft die Kammer 2 und schneidet in der in der Figur 1 dargestellten Ausführungsform in etwa den Mittelpunkt der Kammer 2. Die Einströmrichtung der durch die erste Lufteinlassöffnung 4 in die Kammer 2 strömenden Frischluft, ist im Wesentlichen parallel zur ersten Achse angeordnet und ist in der Figur 1 durch den Pfeil A dargestellt.

In einem der ersten Lufteinlassöffnung 4 im Wesentlichen gegenüberliegenden Bereich der Kammerwand 3 ist eine zweite Lufteinlassöffnung 7 angeordnet. Die zweite Lufteinlassöffnung 7 ist beispielhaft mit einem nicht dargestellten Umluftkanal und/oder mit der Fahrzeugkabine fluidverbunden. Dabei weist die zweite Lufteinlassöffnung 7 beispielhaft einen runden oder eckig ausgebildeten Querschnitt auf. Die Querschnittsfläche der zweiten Lufteinlassöffnung 7 bildet eine zweite Ebene, welche im Wesentlichen senkrecht zu einer zweiten Achse 8 angeordnet ist. Die zweite Achse 8 durchragt dabei beispielhaft die Kammer 2 und schneidet in der in der Figur 1 dargestellten Ausführungsform in etwa den Mittelpunkt der Kammer 2. Die Einströmrichtung der durch die zweite Lufteinlassöffnung 7 in die Kammer 2 strömenden Umluft, ist im Wesentlichen parallel zur zweiten Achse 8 angeordnet und ist in der Figur 1 durch den Pfeil B dargestellt.

Die erste Achse 6 ist im Wesentlichen parallel zur zweiten Achse 8 angeordnet.

Darüber hinaus weist das Luftführungsgehäuse 1 eine in der Kammerwand 3 ausgebildete Luftauslassöffnung 9 auf. Die Luftauslassöffnung 9 ist beispielhaft mit einem nicht dargestellten Luftauslasskanal und/oder mit der Fahrzeugkabine fluidverbunden. Dabei weist die Luftauslassöffnung 9 beispielhaft einen rund oder eckig ausgebildeten Querschnitt auf. Die Querschnittsfläche der Luftauslassöffnung 9 bildet eine dritte Ebene, welche im Wesentlichen senkrecht zu einer dritten Achse 10 angeordnet ist. Die dritte Achse 10 durchragt dabei beispielhaft die Kammer 2. Die Ausströmrichtung der durch die Luftauslassöffnung 9 aus der Kammer 2 strömenden Luft, ist im Wesentlichen senkrecht zur ersten Achse 6 sowie senkrecht zur zweiten Achse 8 angeordnet und ist in der Figur 1 durch den Pfeil C dargestellt.

Die dritte Achse 10 und die zweite Achse 8 sind dabei im Wesentlichen zueinander angeordnet. Ein zwischen der dritten Achse 10 und der zweiten Achse 8 angeordneter Winkel α beträgt dabei etwa 270°.
In der Kammer 3 ist ein Gebläserad 11 angeordnet, welches Luft über die erste Lufteinlassöffnung 4 und/oder die zweite Lufteinlassöffnung 7 in die Kammer 2 einsaugt und durch die Luftauslassöffnung 9 aus der Kammer 2 fördert.

Das Gebläserad 11 ist um eine vierte Achse 12 drehbar gelagert. Die vierte Achse 12 ist im Wesentlichen parallel zur ersten Achse 6 und parallel zur zweiten Achse 8 angeordnet. Darüber hinaus ist die vierte Achse 12 senkrecht zur dritten Achse 10 angeordnet.

Die Drehrichtung des Gebläserads 11 ist in der Figur 1 durch den Pfeil D gekennzeichnet. Die Drehrichtung D bildet eine Kreisfläche, welche die von der ersten Lufteinlassöffnung 4 und von der zweiten Lufteinlassöffnung 7 sowie von der Luftauslassöffnung 9 gebildeten Querschnittsflächen senkrecht schneidet. Dabei liegt die erste Lufteinlassöffnung 4 in der Drehrichtung D des Gebläserads 11 vor der zweiten Lufteinlassöffnung 7 und die zweite Lufteinlassöffnung 7 liegt in der Drehrichtung D des Gebläserads 11 vor der Luftauslassöffnung 9.

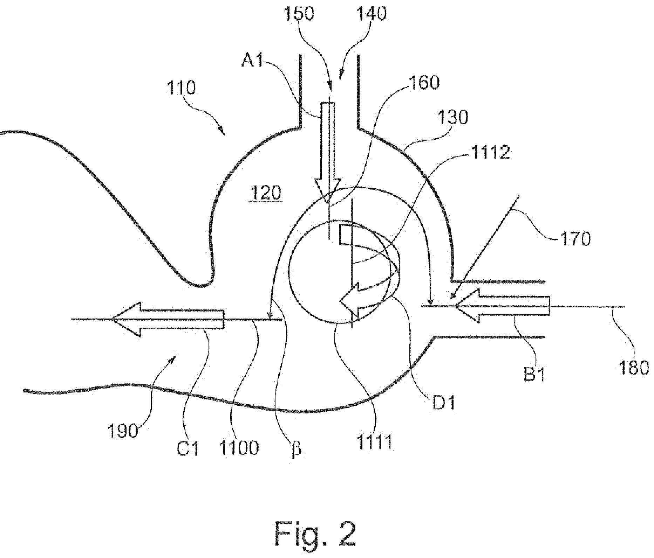

In der Figur 2 ist eine schematische Schnittansicht eines Luftführungsgehäuses 110 gemäß der Erfindung dargestellt, welches beispielhaft Teil einer nicht dargestellten Belüftungs-, Heizungs- oder Klimaanlage ist. Das Luftführungsgehäuse 110 weist eine Kammer 120 mit einer Kammerwand 130 auf. An der Kammerwand 130 ist eine erste Lufteinlassöffnung 140 angeordnet. Die erste Lufteinlassöffnung 140 dient als Frischlufteinlassöffnung 150, welche mit einem nicht dargestellten Frischluftkanal fluidverbunden ist. Die erste Lufteinlassöffnung 140 weist beispielhaft einen runden oder eckig ausgebildeten Querschnitt auf. Die Querschnittsfläche der ersten Lufteinlassöffnung 140 bildet dabei eine erste Ebene, welche senkrecht zu einer ersten Achse 160 angeordnet ist. Die ersten Achse 160 durchragt dabei beispielhaft die Kammer 120 und schneidet in der in der Figur 2 dargestellten Ausführungsform in etwa den Mittelpunkt der Kammer 120. Die Einströmrichtung der durch die erste Lufteinlassöffnung 140 in die Kammer 120 strömenden Frischluft, ist im Wesentlichen parallel zur ersten Achse angeordnet und ist in der Figur 1 durch den Pfeil A1 dargestellt.

Darüber hinaus ist an der Kammerwand 130 eine zweite Lufteinlassöffnung 170 angeordnet. Die zweite Lufteinlassöffnung 170 ist mit einem nicht dargestellten Umluftkanal und/oder mit der Fahrzeugkabine fluidverbunden. Dabei weist die zweite Lufteinlassöffnung 170 beispielhaft einen runden oder eckig ausgebildeten Querschnitt auf. Die Querschnittsfläche der zweiten Lufteinlassöffnung 170 bildet eine zweite Ebene, welche senkrecht zu einer zweiten Achse 180 angeordnet ist. Die zweite Achse 180 durchragt dabei beispielhaft die Kammer 120 und schneidet in der in der Figur 2 dargestellten Ausführungsform in etwa den Mittelpunkt der Kammer 120. Die Einströmrichtung der durch die zweite Lufteinlassöffnung 170 in die Kammer 120 strömende Umluft, ist im Wesentlichen parallel zur zweiten Achse angeordnet und ist in der Figur 2 durch den Pfeil B1 dargestellt.

Die erste Achse 160 ist senkrecht zur zweiten Achse 180 angeordnet.

Darüber hinaus weist das Luftführungsgehäuse 110 eine in der Kammerwand 130 ausgebildete Luftauslassöffnung 190 auf. Die Luftauslassöffnung 190 ist beispielhaft mit einem nicht dargestellten Luftauslasskanal und/oder mit der Fahrzeugkabine fluidverbunden. Dabei weist die Luftauslassöffnung 190 beispielhaft einen rund oder eckig ausgebildeten Querschnitt auf. Die Querschnittsfläche der Luftauslassöffnung 190 bildet eine dritte Ebene, welche senkrecht zu einer dritten Achse 1100 angeordnet ist. Die dritte Achse 1100 durchragt dabei beispielhaft die Kammer 120. Die Ausströmrichtung der durch die Luftauslassöffnung 190 aus der Kammer 120 strömenden Luft, ist im Wesentlichen senkrecht zur ersten Achse 160 sowie parallel zur zweiten Achse 180 angeordnet und ist in der Figur 2 durch den Pfeil C1 dargestellt.

Die dritte Achse 1100 und die zweite Achse 180 sind dabei parallel zueinander angeordnet. Folglich beträgt der Winkel β zwischen der dritten Achse 1100 und der zweiten Achse 180 etwa 180°.

In der Kammer 120 ist ein Gebläserad 1111 angeordnet, welches Luft über die erste Lufteinlassöffnung 140 und/oder die zweite Lufteinlassöffnung 170 in die Kammer 120 einsaugt und durch die Luftauslassöffnung 190 aus der Kammer 120 fördert.

Das Gebläserad 1111 ist um eine vierte Achse 1112 drehbar gelagert. Die vierte Achse 1112 ist parallel zur ersten Achse 160 und senkrecht zur zweiten Achse 180 angeordnet. Darüber hinaus ist die vierte Achse 1112 senkrecht zur dritten Achse 1100 angeordnet.

Die Drehrichtung des Gebläserads 1111 ist in der Figur 2 durch den Pfeil D1 gekennzeichnet.

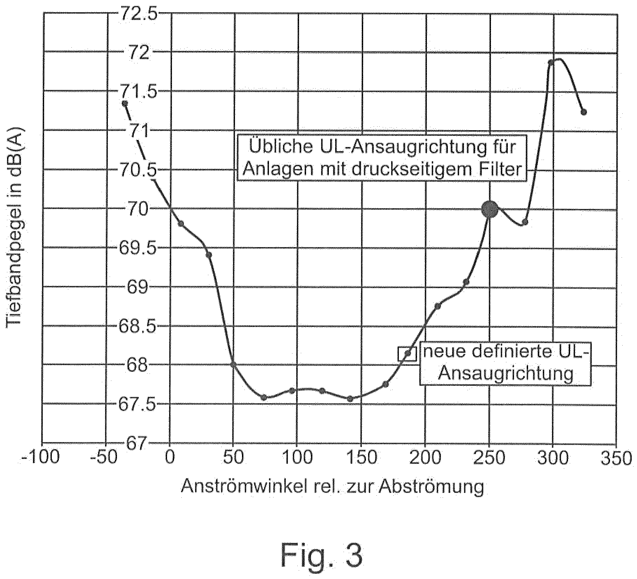

In der Figur 3 ist ein Diagramm dargestellt, welches das in der Figur 1 beschriebene und zum Stand der Technik zählende Luftführungsgehäuse 1 mit dem in der Figur 2 dargestellten erfindungsgemäßen Luftführungsgehäuse 110 vergleicht. Der Vergleich betrifft den jeweils im Tiefenbandbereich auftretenden Lärmpegel (angegeben in Dezibel) in Bezug auf den Winkel a, β, in welchem die Einströmrichtung der durch die zweite Lufteinlassöffnung 7, 170 in die Kammer 2, 120 einströmenden Umluft zu der Ausströmrichtung der durch Luftauslassöffnung 9, 190 aus der Kammer 2, 120 ausströmenden Luft angeordnet ist.

In dem in der Figur 1 dargestellten Beispiel eines Luftführungsgehäuses 1 aus dem Stand der Technik beträgt der Winkel α etwa 270°. Dabei liegt der Tiefenbandbereich bei ca. 70 Dezibel.

Für das in der Figur 2 dargestellte Ausführungsbeispiel eines erfindungsgemäßen Luftführungsgehäuses 110 beträgt der Winkel β etwa 180°. Dabei liegt der in dem in der Figur 3 dargestellten Kurvendiagramm gezeigte Tiefenbandbereich bei ca. 68 Dezibel.

## Patentansprüche

1. Luftführungsgehäuse (110), insbesondere für eine Belüftungs-, Heizungs- oder Klimaanlage eines Fahrzeugs, mit einer Kammer mit einer Kammerwand, mit zumindest einer ersten Lufteinlassöffnung (140) an der Kammerwand, wobei die zumindest eine erste Lufteinlassöffnung (140) eine Querschnittsfläche aufweist, welche senkrecht zu einer ersten Achse (160) angeordnet ist, und mit zumindest einer zweiten Lufteinlassöffnung (170) an der Kammerwand, wobei die zumindest eine zweite Lufteinlassöffnung (170) eine Querschnittsfläche aufweist, welche senkrecht zu einer zweiten Achse (180) angeordnet ist, und mit zumindest einer Luftauslassöffnung (190) in der Kammerwand, wobei die zumindest eine Luftauslassöffnung (190) eine Querschnittsfläche aufweist, welche senkrecht zu einer dritten Achse (1100) angeordnet ist, und mit einem Gebläserad (1111) zum Ansaugen von Luft in das Luftführungsgehäuse (110), **dadurch gekennzeichnet, dass** die zweite Achse (180) und die dritte Achse (1100) parallel zueinander angeordnet sind, wobei die erste Achse (160) und die zweite Achse (180) in einem Winkel von etwa 90° zueinander angeordnet sind und die erste Achse (160) und die dritte Achse (1100) in einem Winkel von etwa 90° zueinander angeordnet sind, wobei die zumindest eine erste Lufteinlassöffnung (140) mit einem Frischluftkanal fluidverbindbar ist, wobei über den Frischluftkanal Frischluft aus der Umgebung des Fahrzeugs durch die zumindest eine erste Lufteinlassöffnung (140) in das Luftführungsgehäuse (110) ansaugbar ist und wobei durch die zumindest eine zweite Lufteinlassöffnung (170) Umluft aus einem Umluftkanal und/oder aus einer Kabine des Fahrzeugs in das Luftführungsgehäuse (110) ansaugbar ist, wobei in der Kammer das Gebläserad angeordnet ist, welches Luft über die erste Lufteinlassöffnung und/oder die zweite Lufteinlassöffnung in die Kammer einsaugt und durch die Luftauslassöffnung aus der Kammer fördert, wobei das Gebläserad (1111) drehbar um eine vierte Achse (1112) gelagert ist, wobei die zweite Achse (180) und die vierte Achse (1112) in einem Winkel von etwa 90° zueinander angeordnet sind und wobei in einer Luftströmungsrichtung hinter der zumindest einen Luftauslassöffnung (190) ein Luftfilter angeordnet ist.

2. Luftführungsgehäuse (110) nach Anspruch 1, **dadurch gekennzeichnet, dass** die erste Achse (160) und die vierte Achse (1112) parallel zueinander angeordnet sind und die dritte Achse (1100) und die vierte Achse (1112) in einem Winkel von etwa 90° zueinander angeordnet sind.

3. Luftführungsgehäuse (110) nach Anspruch 1 oder 2, **dadurch gekennzeichnet, dass** im Bereich der zumindest einen ersten Lufteinlassöffnung (140) und/oder im Bereich der zumindest einen zweiten Lufteinlassöffnung (170) und/oder im Bereich der zumindest einen Luftauslassöffnung (190) Verbindungselemente zur Verbindung des Luftführungsgehäuses (110) mit einer Fluidkanalanordnung ausgebildet sind.

4. Luftführungsgehäuse (110) nach einem der vorhergehenden Ansprüche, **dadurch gekennzeichnet, dass** im Bereich des Luftführungsgehäuses (110) zumindest eine Luftstromsteuervorrichtung und/oder zumindest eine Luftstromsteuerungsanordnung zum wahlweisen und/oder anteilig dosierbaren Ansaugen und/oder Beströmen des Luftführungsgehäuses (110) mit Frischluft und/oder Umluft angeordnet ist.

5. Belüftungs-, Heizungs- oder Klimaanlage, **dadurch gekennzeichnet, dass** die Belüftungs-, Heizungs- oder Klimaanlage zumindest ein gemäß einem der Ansprüche 1 bis 4 ausgebildetes Luftführungsgehäuse (110) aufweist.

## Claims

1. An air guide housing (110), in particular for a ventilation, heating or air conditioning system of a vehicle, with a chamber with a chamber wall, with at least one first air inlet opening (140) at the chamber wall, wherein the at least one first air inlet opening (140) has a cross sectional area which is disposed perpendicular to a first axis (160), and with at least one second air inlet opening (170) at the chamber wall, wherein the at least one second air inlet opening (170) has a cross sectional area which is arranged perpendicular to a second axis (180), and with at least one air outlet opening (190) in the chamber wall, wherein the at least one air outlet opening (190) has a cross sectional area which is arranged perpendicular to a third axis (1100), and with a fan impeller (1111) for suctioning air into the air guide housing (110), **characterised in that** the second axis (180) and the third axis (1100) are arranged parallel to each other, wherein the first axis (160) and the second axis (180) are arranged at an angle of about 90° to one another and the first axis (160) and the third axis (1100) are arranged at an angle of about 90° to one another, wherein the at least one first air inlet opening (140) can be fluidly connected to a fresh air channel, wherein fresh air from the surroundings of the vehicle can be suctioned via the fresh air channel through the at least one first air inlet opening (140) into the air guide housing (110) and wherein through the at least one second air inlet opening (170), circulating air can be suctioned from an air circulating duct and/or from a cabin of the vehicle into the air guide housing (110), wherein the fan impeller is arranged in the chamber and suctions air into the chamber via the first air inlet opening and/or the second air inlet opening and conveys it out of the chamber through the air outlet opening, wherein the fan impeller (1111) is rotatably mounted about a fourth axis (1112), wherein the second axis (180) and the fourth axis (1112) are arranged at an angle of about 90° to one another and wherein an air filter is arranged in an air flow direction downstream of the at least one air outlet opening (190).

2. The air guide housing (110) according to claim 1, **characterised in that** the first axis (160) and the fourth axis (1112) are arranged parallel to one another and the third axis (1100) and the fourth axis (1112) are arranged at an angle of about 90° to one another.

3. The air guide housing (110) according to claim 1 or 2, **characterised in that** in the region of the at least one first air inlet opening (140) and/or in the region of the at least one second air inlet opening (170) and/or in the region of the at least one air outlet opening (190), connecting elements for connecting the air guide housing (110) are formed with a fluid channel array.

4. The air guide housing (110) according to any one of the preceding claims, **characterised in that** in the region of the air guide housing (110), at least one air flow control device and/or at least one air flow control assembly for selective and/or partially metered suctioning and/or ventilation of the air guide housing (110) with fresh air and/or circulating air is arranged.

5. A ventilation, heating or air conditioning system, **characterised in that** the ventilation, heating or air conditioning system comprises at least one air guide housing (110) formed according to one of claims 1 to 4.

## Revendications

1. Carter de guidage d'air (110), en particulier pour un système de ventilation, de chauffage ou de climatisation d'un véhicule, ledit carter comprenant une chambre comportant une paroi de chambre, comprenant au moins une première ouverture d'entrée d'air (140) située sur la paroi de la chambre, où la première ouverture d'entrée d'air (140) au moins au nombre de un présente une section transversale qui est disposée perpendiculairement à un premier axe (160), et comprenant au moins une deuxième ouverture d'entrée d'air (170) située sur la paroi de la chambre, où la deuxième ouverture d'entrée d'air (170) au moins au nombre de un présente une section transversale qui est disposée perpendiculairement à un deuxième axe (180), et comprenant au moins une ouverture de sortie d'air (190) située dans la paroi de la chambre, où l'ouverture de sortie d'air (190) au moins au nombre de un présente une section transversale qui est disposée perpendiculairement à un troisième axe (1100), et comprenant une roue de ventilateur (1111) servant à l'aspiration d'air dans le carter de guidage d'air (110), **caractérisé en ce que** le deuxième axe (180) et le troisième axe (1100) sont disposés en étant parallèles l'un à l'autre, où le premier axe (160) et le deuxième axe (180) sont disposés suivant un angle de 90° environ l'un par rapport à l'autre, et le premier axe (160) et le troisième axe (1100) sont disposés suivant un angle de 90° environ l'un par rapport à l'autre, où la première ouverture d'entrée d'air (140) au moins au nombre de un peut être reliée fluidiquement à un conduit d'air frais, où de l'air frais provenant de l'environnement du véhicule peut, via le conduit d'air frais, être aspiré dans le carter de guidage d'air (110) en passant par la première ouverture d'entrée d'air (140) au moins au nombre de un, et où de l'air ambiant sortant d'un conduit d'air ambiant et/ou sortant de l'habitacle du véhicule peut être aspiré dans le carter de guidage d'air (110) en passant par la deuxième ouverture d'entrée d'air (170) au moins au nombre de un, où la roue de ventilateur est disposée dans la chambre, roue de ventilateur qui aspire dans la chambre de l'air passant par la première ouverture d'entrée d'air et/ou par la deuxième ouverture d'entrée d'air et qui refoule hors de la chambre de l'air passant par l'ouverture de sortie d'air, où la roue de ventilateur (1111) est montée en tournant autour d'un quatrième axe (1112), où le deuxième axe (180) et le quatrième axe (1112) sont disposés suivant un angle de 90° environ l'un par rapport à l'autre, et où un filtre à air est disposé, dans la direction d'écoulement de l'air, en aval de l'ouverture de sortie d'air (190) au moins au nombre de un.

2. Carter de guidage d'air (110) selon la revendication 1, **caractérisé en ce que** le premier axe (160) et le quatrième axe (1112) sont disposés en étant parallèles l'un à l'autre, et le troisième axe (1100) et le quatrième axe (1112) sont disposés suivant un angle de 90° environ l'un par rapport à l'autre.

3. Carter de guidage d'air (110) selon la revendication 1 ou 2, **caractérisé en ce que** des éléments de liaison servant à la liaison du carter de guidage d'air (110) avec un agencement de conduits de fluide sont configurés dans la zone de la première ouverture d'entrée d'air (140) au moins au nombre de un et/ou dans la zone de la deuxième ouverture d'entrée d'air (170) au moins au nombre de un et/ou dans la zone de l'ouverture de sortie d'air (190) au moins au nombre de un.

4. Carter de guidage d'air (110) selon l'une quelconque des revendications précédentes, **caractérisé en ce que**, dans la zone du carter de guidage d'air (110), au moins un dispositif de contrôle du flux d'air et/ou au moins un agencement de commande du flux d'air est disposé pour servir à l'aspiration pouvant être dosée de façon optionnelle et/ou proportionnelle et/ou pour servir à l'alimentation du carter de guidage d'air (110) en flux d'air frais et/ou en flux d'air ambiant.

5. Système de ventilation, de chauffage ou de climatisation, **caractérisé en ce que** le système de ventilation, de chauffage ou de climatisation présente au moins un carter de guidage d'air (110) conçu selon l'une quelconque des revendications 1 à 4.
